# EUROPEAN PATENT SPECIFICATION

(11) **EP 3 789 390 B1**
(45) Date of publication and mention of the grant of the patent: **27.04.2022**
(21) Application number: 20194250.5
(22) Date of filing: 03.09.2020
(51) Int. Cl.: C07F 5/02, B01J 8/00

(54) **A SYNTHESIS SET-UP AND PRODUCTION METHOD FOR HIGH PURITY ANDYDROUS LITHIUM BIS(OXALATO)BORATE (LIBOB)**
EINEN SYNTHESEAUFBAU UND EIN HERSTELLUNGSVERFAHREN FÜR HOCHREINES, WASSERFREIES LITHIUMBIS(OXALATO)BORAT (LIBOB)
UN DISPOSITIF DE SYNTHÈSE ET UNE MÉTHODE DE PRODUCTION DE BIS(OXALATO)BORATE DE LITHIUM ANHYDRE DE HAUTE PURETÉ (LIBOB)

(30) Priority: 03.09.2019 TR 201913271
(43) Date of publication of application: 10.03.2021
(73) Proprietor: Turkiye Enerji Nukleer ve Maden Arastirma Kurumu, Ankara (TR)
(72) Inventor: Zor, Ceren, stanbul (TR); Somer, Mehmet, stanbul (TR); Suba , Yaprak, stanbul (TR); Afyon, Semih, 41400 Kocaeli (TR); Haciu, Durata, stanbul (TR)
(74) Representative: Dericioglu, E. Korhan

(56) References cited:
- CN-A- 107 602 603

## Description

### Field of the Invention

The present invention relates to a set-up and production method developed for high quality and economical production of the electrolyte additive (salt) that will increase the performance and safety of lithium ion batteries used in portable electronic devices and electric vehicles.

### Background of the Invention

In current applications, lithium bis(oxalato)borate hydrate (LiBOB.H₂O) impurity is encountered in lithium bis(oxalato)borate (LiBOB) since the product is not produced under protective atmosphere and in inert gases. Impurities such as lithium carbonate and lithium oxalate are also encountered depending on starting materials. In the state of the art, expensive materials were used as starting materials, and high purity LiBOB was obtained by using expensive lithium salts (e.g. LiBH₄, LiOH) thereby causing high costs.

In the production technologies known in the state of the art, it is seen that there is no information about the environment where the production is carried out and prevention of hydrate phase (LiBOB.H₂O) during production. It can be speculated that production is performed in open air or under vacuum. In addition, high purity LiBOB is obtained by using expensive lithium salts (for example LiBH4, LiOH), and this causes high costs.

United States Patent document no US6506516B1, an application known in the state of the art, discloses production of lithium bis(oxalato)borate and its use as a conducting salt.

German patent document no DE19829030C1, an application known in the state of the art, discloses use of lithium bis(oxalato)borate as a conducting salt in lithium ion batteries.

United States Patent document no US2010145076A1, an application known in the state of the art, discloses production and use of crystalline and completely soluble lithium bis(oxalato)borate.

United States Patent document no US2012276445A1, an application known in the state of the art, discloses pure forms of lithium borate salts and production method of such forms.

CN 107 602 603 discloses a method for preparing lithium bis(oxalato)borate by mixing lithium carbonate, boric acid and oxalic acid in a 1/2 : 1 : 1 ratio in the solid phase in a ball mill.

### Summary of the Invention

The objective of the present invention is to synthesize only high purity anhydrous phase (LiB(C₂O₄)₂, LiBOB) by performing synthesis under protective atmosphere and in inert gases, and, unlike syntheses carried out in the open, to prevent the formation of lithium bis(oxalato)borate hydrate (LiBOB.H₂O), which is the monohydrate phase, and other possible impurity phases.

Another objective of the present invention is to provide a high purity production of the product by means of a more economical method.

### Detailed Description of the Invention

**"A synthesis set-up and production method for high purity anhydrous lithium bis(oxalato)borate (LiBOB)"** developed in order to achieve the objective of the present invention is illustrated in the accompanying figures, in which
- **Figure 1**: is a schematic view of the synthesis set-up according to the present invention.
- **Figure 2**: is a flowchart of the synthesis according to the present invention.
- **Figure 3**: is a graphic representation of the LiBOB X-ray powder diffraction patterns (synthesized in air, synthesized by means of the method of the present invention, the ones after aging in air for 5 and 30 minutes)
- **Figure 4**: is a graphic representation of X-ray powder diffraction patterns of LiBOB obtained after synthesis, of LiBOB obtained by re-enabling recrystallization, and of the remaining impurity (lithium oxalate).

The components shown in the figures are each given reference numerals as follows:
10. Synthesis set-up for the production of anhydrous phase lithium bis(oxalato)borate (LiBOB)
1. Furnace
2. Reaction tube
3. Reaction boat
4. Protective gas source
5. Gas washing bottle

The synthesis set-up (10) for the production of anhydrous lithium bis(oxalato)borate (LiBOB) according to the present invention is used to synthesize the lithium bis(oxalato)borate (LiBOB) salt which is used as an electrolyte additive to increase the performance and safety of lithium-ion batteries used in portable electronic devices and electric vehicles; and comprises
- at least one furnace (1),
- at least one hollow reaction tube (2) which extends into the furnace (1), along the furnace (1), and which has at least one inlet and at least one outlet,
- at least one reaction boat (3); which is positioned on the part of the reaction tube (2) remaining inside the tube furnace (1); and in which a mixture of lithium carbonate, boric acid and oxalic acid, which are starting materials (reactants) used for lithium bis(oxalato) borate (LiBOB) synthesis reaction, in ½: 1: 2 stoichiometric ratios, obtained by directly mixing and/or by mixing thereof in a solvent in advance and then evaporating the solvent, and the tablets obtained therefrom are positioned,
- at least one protective gas source (4), the flow of which is controlled via a tap placed on the inlet port of the reaction tube (2), and which enables to supply protective inert gas into the reaction tube (2) in order to enable to reduce humidity rate in the reaction medium enough to prevent interaction thereof with the starting materials,
- at least one gas washing bottle (5) which is positioned at the outlet of the reaction tube (2), and prevents the protective gas stream passing through the reaction tube (2) from going back into the furnace (1) and enables the speed/rate of the gas stream to be controlled.

In one embodiment of the present invention, a protective gas source (4) containing at least one inert gas selected from a group consisting of Ar, N₂ and dry air and combinations thereof as shielding gas is used.

In one embodiment of the invention, the reaction tube (2) is produced from a material that prevents gas exchange with outside, and this material is preferred to be pure silica, alumina or steel.

In one embodiment of the invention, the reaction boat can be any material which does not react with the starting materials. Within this context, a reaction boat (3) made of at least one material selected from a group consisting of glassy carbon, silica, zirconia, steel or alumina is used.

The anhydrous lithium bis(oxalato)borate (LiBOB) production method (100) of the present invention is comprised of the process steps of
- forming a mixture by combining lithium carbonate, boric acid and oxalic acid which are used as starting materials (reactants) (101),
- adding distilled water to the mixture (102),
- performing mixing and milling process of the mixture formed by adding distilled water (103),
- performing drying process in order to remove the water in the mixture (104),
- placing the obtained precursor powder tablet inside the reaction boat (3) (105),
- disposing the reaction boat (3) into the furnace (1) by placing it inside the reaction tube (2) (106),
- supplying protective gas continuously into the reaction tube (2) by means of the protective gas source (4) and simultaneously applying heat to the reaction boat (3) via the furnace (1) (107),
- performing the reaction under protective gas (108),
- obtaining anhydrous lithium bis(oxalato)borate (LiBOB), which is the final product (109).

In one embodiment of the invention, the reaction is carried out under protective gas at 250 °C for 15 hours.

In one embodiment of the invention, the final product obtained is dissolved in a polar aprotic solvent (e.g. acetonitrile) in order to eliminate amorphous organic impurities that cannot be observed in X-ray powder diffraction, and yielded a product with a purity of over 98-99% by means of re-crystallization method.

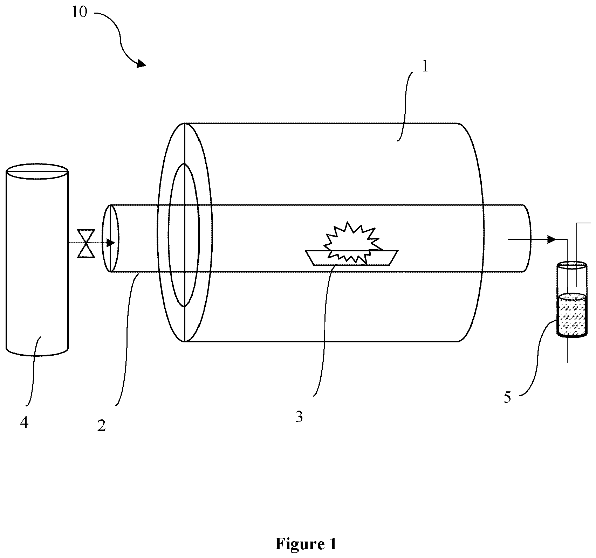

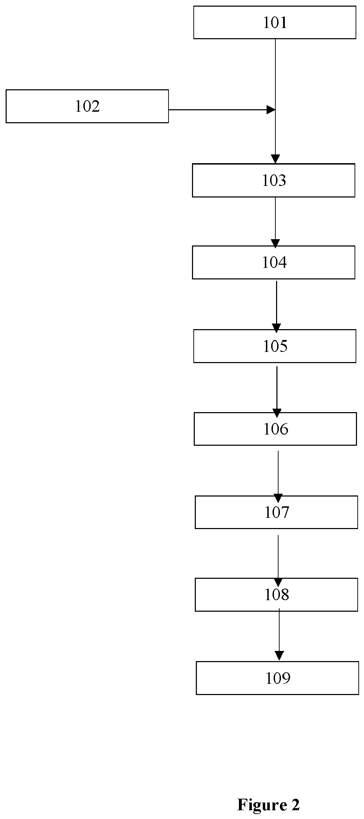

By means of the synthesis set-up (10) for the production of anhydrous lithium bis(oxalato)borate (LiBOB) according to the present invention, high quality and economical production of the electrolyte additive (LiBOB salt) that will increase the performance and safety of lithium-ion batteries primarily used in portable electronic devices and electric vehicles is carried out. Unlike conventional applications, the starting materials in the synthesis of LiBOB are changed within the scope of the invention, and lithium carbonate, boric acid and oxalic acid are used as starting materials. In addition to changing the starting materials, through performing each step of the process under protective gas atmosphere and adding ceramic processing methods, an economical production method that has not been disclosed before is developed different than the previous applications known in the state of the art. In order to obtain high purity and high yield products, the precursor powder, which is obtained by reacting the starting materials in water and drying, is tableted. The tablet is placed in the precursor powder, which acts as a protective element in the synthesis, and is placed into the reaction boats (3) made of glassy carbon (or alumina) **(****Figure 1** **and** **Figure 2**).

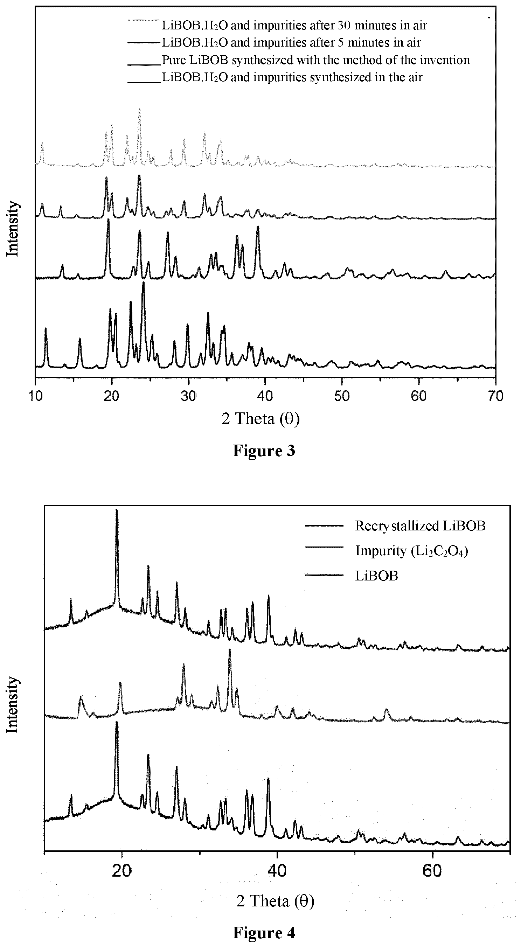

In the anhydrous phase lithium bis(oxalato)borate (LiBOB) production method (100) of the invention, unlike the methods encountered in the literature, the synthesis of LiBOB is carried out in a medium closed to the atmosphere and under protective gas in order to prevent the monohydrate phase impurity encountered in all methods. Argon, nitrogen and dry air are used separately as the protective gas. Therefore, anhydrous phase of LiBOB is obtained by means of controlling the humidity. The storage and characterization of the product after the production is also carried out in humidity-free environment (under argon gas). Unlike the subject matter of the invention, it has been frequently observed in the experimental studies conducted within the scope of the development of the invention that the synthesis taking place under exposure to humid environment causes the formation of monohydrate phase **(****Figure 3**).

The final product obtained within the scope of the invention is dissolved in a polar aprotic solvent (e.g. acetonitrile) in order to eliminate amorphous organic impurities that cannot be observed in X-ray powder diffraction, and transformed into a product with a purity of over 98-99% by means of re-crystallization method. It is shown with the repeated experimental studies that in case a desired purity is not achieved, the desired target can be acquired by increasing the number of re-crystallization steps. X-ray powder diffraction patterns and residual impurities obtained after re-crystallization of LiBOB via the re-crystallization by soxhlet extraction method are shown as an example of this **(****Figure 4**).

By performing the synthesis of the product under protective atmosphere and in inert gases , only the anhydrous phase (LiB(C₂O₄)₂, LiBOB) is obtained after the first synthesis. Unlike the syntheses carried out in open atmosphere, the formation of lithium bis(oxalato)borate hydrate (LiBOB.H₂O), which is the crystalline monohydrate phase, is prevented. Therefore, additional vacuum drying processes that are required to obtain the anhydrous phase are eliminated and a more practical and economical synthesis method is provided. The use of lithium carbonate (Li₂CO₃) as the lithium salt also contributes to the development of a more economical method. The use of lithium carbonate in the specific production method for obtaining high purity LiBOB provides additional advantages in terms of cost and practicality. Furthermore, high purity synthesis of the compound is achieved.

## Claims

1. A synthesis set-up (10) for the production of anhydrous phase lithium bis(oxalato) borate (LiBOB), which is used for synthesizing lithium bis(oxalato)borate (LiBOB) salt used as electrolyte additive that will increase the performance and safety of lithium-ion batteries used in portable electronic devices and electric vehicles, **comprising**
- at least one furnace (1),
- at least one hollow, closed reaction tube (2) which extends into the furnace (1), along the furnace (1), and which has at least one inlet port and at least one outlet port, and **characterized by**
- at least one reaction boat (3); which is positioned on the part of the reaction tube (2) remaining inside the furnace (1); and in which a mixture of lithium carbonate, boric acid and oxalic acid, which are starting materials (reactants) used for lithium bis(oxalato)borate (LiBOB) synthesis reaction, in ½ : 1: 2 stoichiometric ratios obtained by directly mixing and/or by mixing thereof in a solvent in advance and then evaporating the solvent, and the tablets obtained therefrom are positioned,
- at least one protective gas supply (4) the flow of which is controlled via a tap placed on the inlet port of the reaction tube (2), and which enables to supply protective gas into the reaction tube (2) in order to reduce humidity rate in the reaction medium enough to prevent interaction thereof with the starting materials,
- at least one gas washing bottle or gas controller (5) which is positioned at the outlet port of the reaction tube (2), and prevents the protective inert gas stream passing through the reaction tube (2) from going back into the furnace and enables the speed/rate of the gas stream to be controlled.

2. A synthesis set-up (10) for the production of anhydrous phase lithium bis(oxalato) borate (LiBOB) according to claim 1, **characterized by** a protective gas source (4) which contains at least one inert gas selected from a group consisting of Ar, N₂ and dry air and combinations thereof as protective gas.

3. A synthesis set-up (10) for the production of anhydrous phase lithium bis(oxalato) borate (LiBOB) according to claim 1, **characterized by** the reaction tube (2) which is manufactured from a material preventing gas exchange with the outside.

4. A synthesis set-up (10) for the production of anhydrous phase lithium bis(oxalato) borate (LiBOB) according to claim 3, **characterized by** the reaction tube (2) which is manufactured from pure silica.

5. A synthesis set-up (10) for the production of anhydrous phase lithium bis(oxalato) borate (LiBOB) according to claim 3, **characterized by** the reaction tube (2) which is manufactured from alumina.

6. A synthesis set-up (10) for the production of anhydrous phase lithium bis(oxalato) borate (LiBOB) according to claim 3, **characterized by** the reaction tube (2) which is manufactured from steel.

7. A synthesis set-up (10) for the production of anhydrous phase lithium bis(oxalato) borate (LiBOB) according to claim 1, **characterized by** a reaction boat (3) which is manufactured from any material that does not react with the starting materials.

8. A synthesis set-up (10) for the production of anhydrous phase lithium bis(oxalato) borate (LiBOB) according to claim 7, **characterized by** a reaction boat (3) which is manufactured from at least one material selected from a group consisting of glassy carbon, silica, zirconia, steel, and alumina.

9. A production method (100) for anhydrous phase lithium bis(oxalato) borate (LiBOB), which is carried out via a synthesis set-up (10) for the production of anhydrous phase lithium bis(oxalato) borate (LiBOB) according to any one of the preceding claims, comprising the process steps of
- forming a mixture by combining lithium carbonate, boric acid and oxalic acid which are used as starting materials (reactants) (101),
- adding distilled water or another solvent into the mixture (102),
- performing mixing and milling process of the mixture formed by adding distilled water/solvent (103),
- performing drying process in order to remove the water/solvent in the mixture (104),
- forming a tablet/pellet from the obtained precursor powder and placing it inside the reaction boat (3) (105),
- disposing the reaction boat (3) into the furnace (1) by placing it inside the reaction tube (2) (106),
- supplying protective inert gas continuously into the reaction tube (2) by means of the protective gas source (4) and simultaneously applying heat to the reaction boat (3) via the furnace (1) (107),
- performing the reaction under protective inert gas (108),
- obtaining anhydrous phase lithium bis(oxalato)borate (LiBOB), which is the final product (109).

10. A production method (100) for anhydrous phase lithium bis(oxalato) borate (LiBOB) according to claim 9, wherein the reaction is carried out at a selected temperature of 150 - 250 °C under protective inert gas for 2 - 15 hours.

11. A production method (100) for anhydrous phase lithium bis(oxalato) borate (LiBOB) according to claim 9, wherein the obtained final product is dissolved in a polar aprotic solvent in order to eliminate amorphous organic impurities that cannot be observed in X-ray powder diffraction, and transformed into a product with a purity of over 98-99% by means of re-crystallization method

12. A production method (100) for anhydrous phase lithium bis(oxalato) borate (LiBOB) according to claim 9, wherein the obtained final product is dissolved in acetonitrile in order to eliminate amorphous organic impurities that cannot be observed in X-ray powder diffraction.

## Patentansprüche

1. Ein Syntheseaufbau (10) für die Herstellung von Lithiumbis(oxalato)borat (LiBOB) in wasserfreier Phase, der für die Synthese von Lithiumbis(oxalato)borat (LiBOB)-Salz verwendet wird, das als Elektrolytzusatz verwendet wird und die Leistung und Sicherheit von Lithium-Ionen-Batterien erhöht, die in tragbaren elektronischen Geräten und Elektrofahrzeugen verwendet werden, **umfassend**
- mindestens einen Ofen (1),
- mindestens ein hohles, geschlossenes Reaktionsrohr (2), das sich in den Ofen (1) hinein erstreckt, entlang des Ofens (1) verläuft und mindestens eine Einlassöffnung und mindestens eine Auslassöffnung aufweist, und **gekennzeichnet durch**
- mindestens ein Reaktionsschiff (3); das auf dem Teil des Reaktionsrohrs (2) positioniert ist, der im Inneren des Ofens (1) verbleibt; und in dem sich eine Mischung aus Lithiumcarbonat, Borsäure und Oxalsäure, die Ausgangsmaterialien (Reaktanten) sind, die für die Reaktion zur Synthese von Lithiumbis(oxalato)borat (LiBOB) verwendet werden, in stöchiometrischen Verhältnissen ½ : 1: 2, die durch direktes Mischen und/oder durch Mischen derselben in einem Lösungsmittel vorab und anschließendes Verdampfen des Lösungsmittels erhalten werden, und die daraus erhaltenen Tabletten positioniert werden,
- mindestens eine Schutzgaszufuhr (4), deren Durchfluss über ein Ventil gesteuert wird, das an der Einlassöffnung des Reaktionsrohrs (2) platziert ist, und die es ermöglicht, das Schutzgas in das Reaktionsrohr (2) zu führen, um den Feuchtigkeitsgehalt im Reaktionsmedium ausreichend zu reduzieren, um dessen Wechselwirkung mit den Ausgangsmaterialien zu verhindern,
- mindestens eine Gaswaschflasche oder einen Gasregler (5), der an der Auslassöffnung des Reaktionsrohrs (2) positioniert ist und verhindert, dass der durch das Reaktionsrohr (2) strömende schützende Inertgasstrom in den Ofen zurückkehrt, und der es ermöglicht, die Geschwindigkeit/den Durchfluss des Gasstroms zu steuern.

2. Der Syntheseaufbau (10) für die Herstellung von Lithiumbis(oxalato)borat (LiBOB) in wasserfreier Phase nach Anspruch 1, **gekennzeichnet durch** eine Schutzgasquelle (4), die mindestens ein Inertgas, ausgewählt aus einer Gruppe bestehend aus Ar, N₂ und trockener Luft und deren Kombinationen, als Schutzgas enthält.

3. Der Syntheseaufbau (10) für die Herstellung von Lithiumbis(oxalato)borat (LiBOB) in wasserfreier Phase nach Anspruch 1, **gekennzeichnet durch** das Reaktionsrohr (2), das aus einem Material hergestellt ist, das den Gasaustausch mit der Außenwelt verhindert.

4. Der Syntheseaufbau (10) für die Herstellung von Lithiumbis(oxalato)borat (LiBOB) in wasserfreier Phase nach Anspruch 3, **gekennzeichnet durch** das Reaktionsrohr (2), das aus reinem Siliziumdioxid hergestellt wird.

5. Der Syntheseaufbau (10) für die Herstellung von Lithiumbis(oxalato)borat (LiBOB) in wasserfreier Phase nach Anspruch 3, **gekennzeichnet durch** das Reaktionsrohr (2), das aus Aluminiumoxid hergestellt wird.

6. Der Syntheseaufbau (10) für die Herstellung von Lithiumbis(oxalato)borat (LiBOB) in wasserfreier Phase nach Anspruch 3, **gekennzeichnet durch** das Reaktionsrohr (2), das aus Stahl hergestellt wird.

7. Der Syntheseaufbau (10) für die Herstellung von Lithiumbis(oxalato)borat (LiBOB) in wasserfreier Phase nach Anspruch 1, **gekennzeichnet durch** ein Reaktionsschiff (3), das aus einem beliebigen Material hergestellt wird, das nicht mit den Ausgangsmaterialien reagiert.

8. Der Syntheseaufbau (10) für die Herstellung von Lithiumbis(oxalato)borat (LiBOB) in wasserfreier Phase nach Anspruch 7, **gekennzeichnet durch** ein Reaktionsschiff (3), das aus mindestens einem Material hergestellt ist, das aus der Gruppe bestehend aus glasartigem Kohlenstoff, Siliziumdioxid, Zirkoniumdioxid, Stahl und Aluminiumoxid ausgewählt ist.

9. Ein Herstellungsverfahren (100) für Lithiumbis(oxalato)borat (LiBOB) in wasserfreier Phase, das mittels eines Syntheseaufbaus (10) für die Herstellung von Lithiumbis(oxalato)borat (LiBOB) in wasserfreier Phase nach einem der vorhergehenden Ansprüche durchgeführt wird, umfassend die folgenden Verfahrensschritte
- Bilden einer Mischung durch Kombinieren von Lithiumcarbonat, Borsäure und Oxalsäure, die als Ausgangsmaterialien (Reaktanten) verwendet werden (101),
- Zugabe von destilliertem Wasser oder einem anderen Lösungsmittel zu der Mischung (102),
- Durchführen eines Misch- und Mahlvorgangs der durch Zugabe von destilliertem Wasser/Lösungsmittel gebildeten Mischung (103),
- Durchführen eines Trocknungsprozesses, um das Wasser/Lösungsmittel in der Mischung zu entfernen (104),
- Formen einer Tablette/eines Pellets aus dem erhaltenen Vorläuferpulver und Platzieren in das Reaktionsschiff (3) (105),
- Einbringen des Reaktionsschiffes (3) in den Ofen (1) durch Platzieren in das Reaktionsrohr (2) (106),
- kontinuierliches Zuführen von schützendem Inertgas in das Reaktionsrohr (2) mittels der Schutzgasquelle (4) und gleichzeitiges Beheizen des Reaktionsschiffes (3) über den Ofen (1) (107).
- Durchführen der Reaktion unter schützendem Inertgas (108),
- Erhalten von Lithiumbis(oxalato)borat (LiBOB) in wasserfreier Phase, welches das Endprodukt ist (109).

10. Das Herstellungsverfahren (100) für Lithiumbis(oxalato)borat (LiBOB) in wasserfreier Phase, in wasserfreier Phase nach Anspruch 9, wobei die Reaktion bei einer ausgewählten Temperatur von 150 - 250 °C unter schützendem Inertgas für 2 - 15 Stunden durchgeführt wird.

11. Das Herstellungsverfahren (100) für Lithiumbis(oxalato)borat (LiBOB) in wasserfreier Phase, in wasserfreier Phase nach Anspruch 9, wobei das erhaltene Endprodukt in einem polaren aprotischen Lösungsmittel gelöst wird, um amorphe organische Verunreinigungen zu entfernen, die bei der Röntgenpulverdiffraktion nicht beobachtet werden können, und mittels des Rekristallisationsverfahrens in ein Produkt mit einer Reinheit von mehr als 98-99% umgewandelt wird.

12. Das Herstellungsverfahren (100) für Lithiumbis(oxalato)borat (LiBOB) in wasserfreier Phase, in wasserfreier Phase nach Anspruch 9, wobei das erhaltene Endprodukt in Acetonitril gelöst wird, um amorphe organische Verunreinigungen zu entfernen, die bei der Röntgenpulverdiffraktion nicht beobachtet werden können.

## Revendications

1. Une installation de synthèse (10) pour la production de bis(oxalato)borate de lithium (LiBOB) en phase anhydre, qui est utilisée pour synthétiser le sel de bis(oxalato)borate de lithium (LiBOB) utilisé comme additif d'électrolyte qui augmentera la performance et la sécurité des batteries lithium-ion utilisées dans les dispositifs électroniques portables et les véhicules électriques, **comprenant**
- au moins un four (1),
- au moins un tube de réaction creux, fermé (2) qui s'étend dans le four (1), le long du four (1), et qui a au moins un orifice d'entrée et au moins un orifice de sortie, et **caractérisée par**
- au moins un bateau de réaction (3) ; qui est positionné sur la partie du tube de réaction (2) restant à l'intérieur du four (1) ; et dans lequel se trouve un mélange de carbonate de lithium, d'acide borique et d'acide oxalique, qui sont des matériaux de départ (réactifs) utilisés pour la réaction de synthèse du bis(oxalato)borate de lithium (LiBOB), dans des rapports stoechiométrique ½ : 1 : 2 obtenus par mélange direct et/ou par mélange de ceux-ci dans un solvant à l'avance et ensuite évaporation du solvant, et les comprimés obtenus à partir de ceux-ci sont positionnés,
- au moins une alimentation en gaz protecteur (4) dont le débit est contrôlé via un robinet placé sur l'orifice d'entrée du tube de réaction (2), et qui permet de fournir le gaz protecteur dans le tube de réaction (2) afin de réduire le taux d'humidité dans le milieu réactionnel suffisamment pour empêcher son interaction avec les matériaux de départ,
- au moins une bouteille de lavage de gaz ou un contrôleur de gaz (5) qui est positionné à l'orifice de sortie du tube de réaction (2), et empêche le flux de gaz inerte protecteur traversant le tube de réaction (2) de retourner dans le four et permet de contrôler la vitesse/le débit du flux gazeux.

2. L'installation de synthèse (10) pour la production de bis(oxalato)borate de lithium (LiBOB) en phase anhydre selon la revendication 1, **caractérisée par** une source de gaz protecteur (4) qui contient au moins un gaz inerte choisi dans un groupe constitué par Ar, N2 et l'air sec et leurs combinaisons comme gaz protecteur.

3. L'installation de synthèse (10) pour la production de bis(oxalato)borate de lithium (LiBOB) en phase anhydre selon la revendication 1, **caractérisée par** le tube de réaction (2) qui est fabriqué à partir d'un matériau empêchant l'échange de gaz avec l'extérieur.

4. L'installation de synthèse (10) pour la production de bis(oxalato)borate de lithium (LiBOB) en phase anhydre selon la revendication 3, **caractérisée par** le tube de réaction (2) qui est fabriqué à partir de silice pure.

5. L'installation de synthèse (10) pour la production de bis(oxalato)borate de lithium (LiBOB) en phase anhydre selon la revendication 3, **caractérisée par** le tube de réaction (2) qui est fabriqué à partir d'alumine.

6. L'installation de synthèse (10) pour la production de bis(oxalato)borate de lithium (LiBOB) en phase anhydre selon la revendication 3, **caractérisée par** le tube de réaction (2) qui est fabriqué à partir d'acier.

7. L'installation de synthèse (10) pour la production de bis(oxalato)borate de lithium (LiBOB) en phase anhydre selon la revendication 1, **caractérisée par** un bateau de réaction (3) qui est fabriqué à partir de tout matériau qui ne réagit pas avec les matériaux de départ.

8. L'installation de synthèse (10) pour la production de bis(oxalato)borate de lithium (LiBOB) en phase anhydre selon la revendication 7, **caractérisée par** un bateau de réaction (3) qui est fabriqué à partir d'au moins un matériau choisi dans le groupe constitué par le carbone vitreux, la silice, la zircone, l'acier et l'alumine.

9. Un procédé de production (100) pour bis(oxalato)borate de lithium (LiBOB) en phase anhydre, qui est réalisé via une installation de synthèse (10) pour la production de bis(oxalato)borate de lithium (LiBOB) en phase anhydre selon l'une quelconque des revendications précédentes, comprenant les étapes de procédé suivantes
- former un mélange en combinant le carbonate de lithium, l'acide borique et l'acide oxalique qui sont utilisés comme matériaux de départ (réactifs) (101),
- ajouter de l'eau distillée ou un autre solvant dans le mélange (102),
- effectuer un processus de mélange et de broyage du mélange formé par l'ajout d'eau distillée/solvant (103),
- effectuer un processus de séchage afin d'éliminer l'eau/solvant dans le mélange (104),
- former une tablette/pellet à partir de la poudre de précurseur obtenue et la placer à l'intérieur du bateau de réaction (3) (105),
- disposer le bateau de réaction (3) dans le four (1) en le plaçant à l'intérieur du tube de réaction (2) (106),
- fournir en continu un gaz inerte protecteur dans le tube de réaction (2) au moyen de la source de gaz protecteur (4) et appliquer simultanément de la chaleur au bateau de réaction (3) via le four (1) (107),
- effectuer la réaction sous gaz inerte protecteur (108),
- obtenir le bis(oxalato)borate de lithium (LiBOB) en phase anhydre, qui est le produit final (109).

10. Le procédé de production (100) pour bis(oxalato)borate de lithium (LiBOB) en phase anhydre selon la revendication 9, dans lequel la réaction est réalisée à une température choisie de 150 - 250 °C sous gaz inerte protecteur pendant 2 - 15 heures.

11. Le procédé de production (100) pour bis(oxalato)borate de lithium (LiBOB) en phase anhydre selon la revendication 9, dans lequel le produit final obtenu est dissous dans un solvant aprotique polaire afin d'éliminer les impuretés organiques amorphes qui ne peuvent pas être observées par la diffraction des rayons X sur poudre, et transformé en un produit avec une pureté de plus de 98-99% au moyen du procédé de recristallisation.

12. Le procédé de production (100) pour bis(oxalato)borate de lithium (LiBOB) en phase anhydre selon la revendication 9, dans lequel le produit final obtenu est dissous dans l'acétonitrile afin d'éliminer les impuretés organiques amorphes qui ne peuvent pas être observées par la diffraction des rayons X sur poudre.
